# DEMANDE DE BREVET EUROPEEN

(11) **EP 4 693 891 A1**
(43) Date de publication de la demande: **11.02.2026**
(21) Numéro de dépôt: 25194284.3
(22) Date de dépôt: 06.08.2025
(51) Int. Cl.: H02S 20/32, B60K 16/00

(54) **SYSTÈME PHOTOVOLTAÏQUE POUR UN VÉHICULE MOBILE**

(30) Priorité: 06.08.2024 FR 2408711
(71) Demandeur: 3S Marine, 44380 Pornichet (FR)
(72) Inventeur: GERARD, Arthur, 44380 PORNICHET (FR)
(74) Mandataire: AtlantIP International

(57) **Abrégé**

L'invention concerne un système photovoltaïque pour un véhicule mobile et comportant une embase (11) formant un châssis fixe destiné à être fixé solidairement à un élément de support (2) du véhicule mobile, un panneau photovoltaïque supporté par une structure porteuse (14) mobile en rotation par rapport à l'embase (11), un moteur électrique (17) d'entrainement configuré pour faire tourner la structure porteuse (14) autour d'un axe de rotation principal (O1), et un organe de couplage (15) électrique placé entre la structure porteuse (14) et l'embase (11) afin d'autoriser une connexion électrique continue malgré plusieurs rotations de la structure porteuse (14) par rapport à l'embase (11). L'organe de couplage (15) électrique permet de garantir un couplage électrique entre deux premiers fils électriques (101) s'étendant entre le panneau photovoltaïque et l'organe de couplage (15) électrique et des deuxièmes fils électriques (102) s'étendant entre l'organe de couplage (15) électrique et un réseau de bord du véhicule mobile.

## Description

Le contexte technique de la présente invention est celui de la production d'énergie, et notamment la production d'énergie électrique à partir de l'énergie solaire pour des véhicules de transports et/ou de loisirs, c'est-à-dire pour durant le déplacement de véhicules de transport et/ou de loisirs, terrestres ou maritimes. Plus particulièrement, l'invention a trait à un système photovoltaïque pour un véhicule mobile et un procédé de contrôle d'un tel système photovoltaïque.

Dans l'état de la technique, on connait l'utilisation de panneaux photovoltaïques associés à des véhicules de loisirs, tels que par exemple des camping-cars, des caravanes, des fourgonnettes ou encore des navires de plaisance. De tels panneaux photovoltaïques permettent de rendre ces véhicules de loisirs autonomes quant à leur production et consommation d'énergie électrique pour les équipements qu'ils embarquent. Ces panneaux photovoltaïques rendent ainsi possible la vie quotidienne dans ces véhicules de loisirs sur de longues périodes et dans des lieux isolés, en dehors de tout réseau électrique urbain par exemple.

Ainsi, on connait par exemple l'utilisation de panneaux photovoltaïques déployés à plat ou de manière inclinable sur des toits de camping-car, de caravanes ou de fourgonnettes, mais encore ceux embarqués sur un portique de navire de plaisance. Or, de telles installations ne sont pas très efficaces, car elles souffrent d'un mauvais alignement par rapport au soleil et sa course diurne dans le ciel. En effet, le rendement énergétique d'un panneau photovoltaïque dépend fortement de son orientation par rapport au soleil.

On comprend aussi que, pour de tels véhicules de loisirs, la bonne orientation d'un panneau photovoltaïque dépend aussi de la disposition du véhicule de loisirs par rapport au soleil lui-même, cette disposition changeant de manière aléatoire en fonction du déplacement même du véhicule de loisirs.

On connait des orienteurs de panneaux photovoltaïques qui permettent de suivre la course du soleil dans le ciel. De tels orienteurs comportent un ou deux axes de rotation motorisés et permettent d'orienter le panneau photovoltaïque de manière optimale par rapport à la position du soleil durant sa course. Cependant, un inconvénient connu de tels orienteurs est qu'ils ne sont pas compatibles avec des véhicules de loisirs. En d'autres termes, de tels orienteurs solaires sont connus comme des structures terrestres fixes installées dans des jardins ou sur des toits - souvent de très grandes dimensions, non compatibles avec une intégration sur un véhicule de loisirs. On connait aussi de tels orienteurs de plus petites dimensions mais qui ne fonctionnent que lorsque le véhicule de loisirs est à l'arrêt, de manière analogue à une structure terrestre fixe.

En effet, de tels orienteurs embarquent généralement une butée mécanique ou électronique qui les empêche de tourner sur eux même à 360° et sur plusieurs tours. En effet, pour une position d'installation donnée - par une installation fixe dans un jardin ou sur le toit d'un véhicule de loisirs à l'arrêt - la course du soleil dans le ciel est délimitée par une position angulaire aurorale et une position angulaire crépusculaire. En d'autres termes, tous les orienteurs connus font marche arrière lorsqu'ils atteignent leur position crépusculaire pour retourner vers leur position aurorale.

Cette contrainte fonctionnelle et technique - non considérée par les orienteurs terrestres connus - est notamment liée à un problème d'enroulement des fils électriques de raccordement du panneau photovoltaïque à un réseau de bord du véhicule de loisirs. En effet, les orienteurs connus n'autorisent pas de multiples rotations autour de leur axe principal de rotation, c'est-à-dire une capacité infinie de rotation autour de l'axe de rotation, car celles-ci conduiraient à un dysfonctionnement voire une casse des fils électriques et/ou de la connexion avec le panneau photovoltaïque.

Cet état de fait n'est pas souhaité et la présente invention a justement pour objet de proposer un nouveau système photovoltaïque afin de répondre au moins en grande partie aux problèmes précédents et de conduire en outre à d'autres avantages.

Un autre but de l'invention est de pouvoir équiper un véhicule mobile avec un tel système photovoltaïque afin de suivre la course du soleil dans le ciel pendant le déplacement du véhicule mobile.

Un autre but de l'invention est d'autoriser un tel système photovoltaïque à pouvoir faire de multiple rotation, c'est-à-dire un système photovoltaïque capable de réalise une infinité de rotations autour de l'axe de rotation.

Selon un premier aspect de l'invention, on atteint au moins l'un des objectifs précités avec un système photovoltaïque pour un véhicule mobile, notamment un véhicule automobile, un camping-car, une caravane ou un navire, le système photovoltaïque comportant :
- une embase formant un châssis fixe destiné à être fixé solidairement à un élément de support du véhicule mobile ;
- un panneau photovoltaïque supporté par une structure porteuse mobile en rotation par rapport à l'embase ;
- au moins un fil électrique s'étendant entre la structure porteuse et l'embase afin de relier électriquement le panneau photovoltaïque à un réseau électrique et/ou à une batterie électrique ;
- un moteur électrique d'entrainement configuré pour faire tourner la structure porteuse autour d'au moins un axe de rotation ;
- un organe de couplage électrique formant une interface entre la structure porteuse et l'embase de sorte à autoriser une connexion électrique continue malgré plusieurs rotations de la structure porteuse par rapport au châssis fixe, le système photovoltaïque comportant des premiers fils électriques reliant le panneau photovoltaïque à l'organe de couplage électrique et des deuxièmes fils électriques reliant l'organe de couplage au réseau électrique et/ou à la batterie électrique, les deuxièmes fils électriques s'étendant au travers de l'embase.

Dans le contexte de la présente invention, le panneau photovoltaïque est configuré pour transformer une énergie lumineuse solaire en électricité. Le panneau photovoltaïque comporte une pluralité de cellules photovoltaïques qui s'étendent selon une surface plane ou incurvée. Le panneau photovoltaïque est préférentiellement du type d'un panneau rigide, éventuellement du type d'un panneau souple. Le panneau photovoltaïque est supporté par la structure porteuse. La structure porteuse comporte notamment un cadre rigide placé en arrière du panneau photovoltaïque et permettant de maintenir en forme ledit panneau photovoltaïque. Le panneau photovoltaïque peut prendre une forme quelconque, et notamment rectangulaire de préférence. Dans le contexte de l'invention, le panneau photovoltaïque est limité à un usage de loisirs. En d'autres termes, l'énergie produite par le panneau photovoltaïque est préférentiellement inférieure à 600 W. Ainsi, l'invention exclue les panneaux photovoltaïques de très grande dimension - c'est-à-dire ceux de plus de 2m de côté par exemple - ou les installations de type industrielle - c'est-à-dire celles produisant plusieurs kilowatts - ou encore les installations photovoltaïques terrestres plus généralement. D'une manière générale, l'invention adresse la fourniture d'énergie électrique à un véhicule nomade, par opposition à une installation fixe, terrestre ou maritime - qui ne résoudrait bien évidemment pas le même problème technique puisqu'elle n'y serait pas soumise ! En d'autres termes, l'invention se limite aux usages d'alimentation électrique d'un véhicule en mouvement dont la position relative au soleil n'est pas constante, tel qu'un navire ou un véhicule terrestre par exemple. En particulier, l'invention se limite aux usages de loisirs et à l'alimentation électrique d'un voilier, d'un navire de plaisance, d'une caravane ou d'un camping car par exemple.

Dans le contexte de la présente invention, l'embase forme un châssis fixe pour le système photovoltaïque. L'embase est destinée à être reliée à un élément de structure du véhicule mobile auquel le système photovoltaïque est attaché. L'embase est préférentiellement de la forme d'une structure tubulaire. L'embase matérialise l'axe de rotation autour duquel la structure porteuse et le panneau photovoltaïque sont mobiles en rotation.

Dans le contexte de la présente invention, la structure porteuse forme un cadre de support et de maintien pour le panneau photovoltaïque. La structure porteuse est mobile en rotation par rapport à l'embase et relativement à l'axe de rotation.

Dans le contexte de la présente invention, le moteur électrique est configuré pour entrainer en rotation la structure porteuse et le panneau photovoltaïque autour de l'axe de rotation. Ainsi, le moteur électrique permet de suivre la course du soleil durant le déplacement du véhicule mobile, en orientant la structure porteuse et le panneau photovoltaïque dans la meilleure orientation par rapport au soleil et selon la direction du véhicule mobile. Selon l'invention, le système photovoltaïque est d'abord un système de suivi suivant un seul axe, l'axe de rotation. Comme il sera précisé ultérieurement, le système photovoltaïque selon l'invention est éventuellement un système de suivi suivant deux axes motorisés afin d'améliorer l'orientation du panneau photovoltaïque par rapport au soleil.

Dans le contexte de la présente invention, l'organe de couplage permet de résoudre le problème technique principal de l'invention, en autorisant de multiples rotations autour de l'axe de rotation tout en garantissant une continuité électrique entre les premiers fils électriques provenant du panneau photovoltaïque et les deuxièmes fils électriques destinés à relier électriquement le système photovoltaïque à un réseau de bord du véhicule mobile, c'est-à-dire par exemple un réseau électrique ou une batterie de stockage. En d'autres termes, le système photovoltaïque conforme au premier aspect de l'invention est configuré pour autoriser une infinité de rotations autour de l'axe de rotation. À cet effet, par exemple, l'organe de couplage électrique comporte une première partie associée aux premiers fils électriques et une deuxième partie associée aux deuxièmes fils électriques, la première partie et la deuxième partie étant en contact glissant l'une par rapport à l'autre et vis-à-vis de l'axe de rotation, de sorte qu'il est alors possible de transférer un courant électrique depuis les premiers fils via la première partie vers les deuxièmes fils et par l'intermédiaire de la deuxième partie. Ainsi, l'organe de couplage est configuré pour autoriser la transmission de puissance électrique et/ou de signaux électriques porteurs d'information servant au pilotage de la carte électrique de commande et/ou du moteur électrique et/ou de capteur(s) embarqués(s) sur le système photovoltaïque selon l'invention. L'organe de couplage collabore avec l'embase et avec la structure porteuse pour proposer une interface de couplage électromécanique qui permet de résoudre le problème technique de manière astucieuse.

Ainsi, le système photovoltaïque conforme au premier aspect de l'invention rend possible d'équiper un véhicule mobile avec un tel système photovoltaïque et de suivre la course du soleil dans le ciel pendant le déplacement du véhicule mobile. En d'autres termes, le système photovoltaïque permet de réaliser de multiples rotations sans craindre un enroulement excessif voire une rupture des fils électriques.

Le système photovoltaïque conforme au premier aspect de l'invention comprend avantageusement au moins un des perfectionnements ci-dessous, les caractéristiques techniques formant ces perfectionnements pouvant être prises seules ou en combinaison :
- le système photovoltaïque comporte un dispositif photosensible configuré pour détecter un flux lumineux provenant du soleil. Ce flux lumineux est utilisé pour en déduire un décalage angulaire entre le panneau photovoltaïque et la position du soleil dans le ciel, afin de piloter le moteur électrique pour réduire ce décalage angulaire et aligner le panneau photovoltaïque avec le soleil. Plus particulièrement, le système photovoltaïque comporte un dispositif photorésistif utilisé pour piloter la rotation du panneau photovoltaïque autour de son axe de rotation. En particulier, selon un exemple de réalisation préféré de l'invention, le dispositif photorésistif comporte deux capteurs photosensibles séparés par une cloison qui s'étend entre eux, de sorte à ce que, soumis à la lumière du soleil, la cloison forme une ombre sur l'un et/ou l'autre des capteurs photosensibles. Ainsi, en fonction de la position de l'ombre sur l'un ou l'autre des capteurs photosensibles, il est possible de piloter le moteur électrique dans un sens ou dans l'autre afin d'entrainer en rotation suivant le sens horaire ou anti-horaire, selon la position du soleil dans le ciel et la disposition du véhicule mobile sur lequel le système photovoltaïque est embarqué ;
- le panneau photovoltaïque est configuré pour générer une puissance électrique inférieure à 600 W, préférentiellement inférieure à 200 W, préférentiellement encore comprise entre 50 W et 150 W. Cette configuration avantageuse rend le panneau photovoltaïque particulièrement adapté à un usage de loisirs, c'est-à-dire pour permettre une autonomie électrique pour les besoins d'un véhicule mobile telle que mentionné précédemment ;
- le panneau photovoltaïque présente une surface inférieure à 3 m², préférentiellement comprise entre 0,2 m² et 1 m², préférentiellement encore égale ou sensiblement égale à 0,4 m². Là encore, cette configuration avantageuse rend le panneau photovoltaïque particulièrement adapté à un usage de loisirs, c'est-à-dire pour un encombrement minimal et suffisant pour permettre l'autonomie électrique mentionné précédemment ;
- le système photovoltaïque comporte un dispositif d'assemblage sur l'élément de support du véhicule mobile, le dispositif d'assemblage étant associé à une partie de l'embase située à distance de la structure porteuse. Le dispositif d'assemblage permet de lier de manière détachable le système photovoltaïque à l'élément de support du véhicule mobile. Par exemple, le dispositif d'assemblage prend la forme d'une platine de fixation qui s'étend à la base du mât (cylindrique) et pouvant être fixée solidairement à l'élément de support. En outre, le dispositif d'assemblage permet de faciliter la mise en œuvre et l'intégration du système photovoltaïque sur n'importe quel type de véhicule mobile et selon n'importe quelle configuration ;
- selon un mode de réalisation préféré de l'invention, le dispositif d'assemblage est du type d'un dispositif de pressage de l'élément de support entre une plaque de serrage et une contre-plaque de serrage, la plaque de serrage et la contre-plaque de serrage étant reliées entre elles par des vis de serrage. Ainsi, l'élément de support s'étend entre la plaque de serrage et la contre-plaque de serrage. En resserrant les vis de serrage, il est ainsi possible de brider le dispositif d'assemblage, et par extension le système photovoltaïque selon l'invention, sur l'élément de support du véhicule mobile ;
- le dispositif d'assemblage comporte au moins un patin de serrage situé entre la plaque de serrage et la contre-plaque de serrage, le patin de serrage présentant une empreinte complémentaire à une section transverse de l'élément de support placé dans le dispositif d'assemblage. Chaque patin de serrage est par exemple formé d'un matériau polymérique. Cette configuration avantageuse permet d'améliorer la prise contre l'élément de support et facilite un serrage efficace et non dégradant du dispositif d'assemblage sur l'élément de support ;
- le dispositif d'assemblage comporte un passage de câble électrique au travers duquel passent les deuxièmes fils électriques hors dudit dispositif d'assemblage. Cette configuration avantageuse permet de faciliter la circulation d'un câble électrique et/ou de fils électriques au travers du dispositif d'assemblage afin de connecter électriquement le système photovoltaïque à un réseau de bord du véhicule mobile et/ou à une batterie de stockage embarquée sur ledit véhicule mobile. En particulier, le passage de câble comporte un trou débouchant dans une face latérale du dispositif d'assemblage ;
- la structure porteuse comporte une platine supportant une carte électronique de contrôle du système photovoltaïque et un couvercle de fermeture collaborant avec la platine. La platine prend par exemple la forme d'une plaque disposée au niveau d'une extrémité libre de l'embase. La carte électronique de contrôle est configurée pour piloter le système photovoltaïque. La carte électronique de contrôle prend la forme d'un module de commande du système photovoltaïque. La carte électronique de contrôle comporte un circuit électronique permettant d'interfacer le moteur électrique avec le panneau photovoltaïque et le réseau de bord et/ou la batterie de stockage d'une part, et éventuellement le dispositif photosensible et/ou d'autres capteurs utilisés pour un pilotage plus fin du système photovoltaïque ;
- la structure porteuse comporte un joint d'étanchéité associé au couvercle de fermeture ou à la platine, de sorte que joint d'étanchéité soit pincé entre le couvercle de fermeture et la platine. Cette configuration avantageuse permet d'éviter que de l'eau ou de l'humidité ne s'infiltre en trop grande quantité entre le couvercle de fermeture et la platine, c'est-à-dire pour protéger la carte électronique de contrôle. Dans le contexte de la présente invention, la notion d'étanchéité s'entend vis-à-vis de l'eau ou de l'humidité et pour une pression atmosphérique. A titre d'exemple non limitatif, le joint d'étanchéité prend la forme d'un joint plat en caoutchouc ou en élastomère ;
- la structure porteuse comporte aussi au moins un connecteur électrique permettant de relier électriquement le panneau photovoltaïque à la carte électronique de contrôle par l'intermédiaire des premiers fils électriques. En particulier, l'au moins un connecteur électrique s'étend au travers du couvercle de fermeture ou, préférentiellement, de la platine. Ainsi, l'au moins un connecteur électrique est relié électriquement au collecteur tournant par l'intermédiaire des premiers fils électriques. En d'autres termes, les premiers fils électriques comportent des fils électriques reliant chaque au moins un connecteur électrique au collecteur tournant, et des fils électriques reliant chaque au moins un connecteur électrique à la carte électronique de contrôle embarquée dans la structure porteuse ;
- le moteur électrique est relié électriquement à chaque au moins un connecteur électrique et/ou à la carte électronique de contrôle, de sorte que le moteur électrique est alimenté par l'énergie électrique produite par le panneau photovoltaïque. Cette configuration avantageuse permet d'alimenter le moteur électrique par le panneau photovoltaïque lui-même. Ainsi, le système photovoltaïque n'est pas consommateur d'électricité pour le véhicule mobile sur lequel il est destiné à être monté. Éventuellement, le système photovoltaïque comporte une batterie de stockage électrique reliée électriquement à la carte électronique de contrôle afin de stocker une énergie électrique depuis celle produite par le panneau photovoltaïque, le moteur électrique étant relié électriquement à la batterie électrique de stockage afin de pouvoir faire tourner la structure porteuse même en l'absence d'éclairement par le soleil. Cette configuration est particulièrement avantageuse pour pouvoir faire pivoter le système photovoltaïque vers la position aurorale, le matin venu, et en l'absence de toute source de lumière ou d'énergie complémentaire. Ainsi, le système photovoltaïque démarre sa transformation d'énergie solaire au plus tôt avec un alignement optimal dès les premiers instants qui suivent le lever de soleil et peu importe la disposition du véhicule mobile ou l'évolution de sa disposition durant la nuit ;
- la platine comporte deux pattes de fixations latérales, situées de part et d'autre de l'axe de rotation, chaque patte de fixation permettant de fixer le panneau photovoltaïque à la plaine. Chaque patte de fixation est située de part et d'autre de la platine, suivant un axe perpendiculaire à l'axe de rotation. Chaque patte de fixation permet de matérialiser un axe de rotation secondaire pour le panneau photovoltaïque. L'axe de rotation secondaire est embarqué en rotation autour de l'axe de rotation formant un axe de rotation principal. L'axe de rotation secondaire n'est pas nécessairement utilisé, c'est-à-dire motorisé dans la stratégie d'orientation mise en œuvre par le système photovoltaïque ;
- ainsi, selon une première variante de réalisation, le panneau photovoltaïque est fixé solidairement à la platine de manière statique, c'est-à-dire selon une orientation prédéterminée suivant un axe de rotation secondaire qui s'étend entre les deux pattes de fixation. En particulier, chaque patte de fixation comporte une butée de serrage à vis permettant de serrer un cadre porteur du panneau photovoltaïque contre la patte de fixation. Dans cette première variante de réalisation, le panneau photovoltaïque est incliné autour de l'axe de rotation secondaire de manière statique, comme un préréglage. Le panneau photovoltaïque est maintenu incliné suivant un angle d'inclinaison constant lors de la rotation autour de l'axe de rotation principal. Cette configuration avantageuse est plus économique, car l'axe de rotation secondaire n'est pas motorisé. Dans ce mode de fonctionnement, l'angle d'inclinaison est réglé par exemple en fonction de la latitude à laquelle le véhicule mobile se trouve ;
- selon une deuxième variante de réalisation, le panneau photovoltaïque est mobile en rotation par rapport à la platine de fixation et suivant un axe de rotation secondaire qui s'étend entre les deux pattes de fixation. En particulier, chaque patte de fixation définit un axe de rotation secondaire du panneau photovoltaïque, l'axe de rotation secondaire étant sécant - et préférentiellement perpendiculaire - à l'axe de rotation dit principal du système photovoltaïque, le système photovoltaïque comportant un moteur secondaire d'entrainement du panneau photovoltaïque autour de l'axe de rotation secondaire. Dans cette deuxième variante de réalisation, est l'inclinaison du panneau photovoltaïque autour de l'axe de rotation secondaire est réalisée de manière de manière dynamique, à l'aide du moteur électrique secondaire. Le panneau photovoltaïque est ainsi piloté de manière à ajuster son inclinaison, pour n'importe quelle orientation autour de l'axe de rotation principal, afin d'optimiser son orientation par rapport au soleil suivant les deux axes de rotation. Cette configuration avantageuse est plus précise et permet de maximiser les rendements du panneau photovoltaïque par une meilleure orientation vis-à-vis du soleil, peu importe sa position dans le ciel et la disposition du véhicule mobile sur lequel le système photovoltaïque est embarqué. Cette configuration est particulièrement intéressante par exemple dans le cas où le véhicule mobile est du type d'un navire et soumis à une houle ou à un mouvement de roulis par exemple ;
- une distance - prise le long de l'axe de rotation - entre les butées de serrage et le dispositif d'assemblage du système photovoltaïque est supérieure à une hauteur du panneau photovoltaïque afin d'autoriser sa rotation. Cette configuration avantageuse permet d'éviter toute interférence entre le panneau photovoltaïque et l'embase ;
- l'organe de couplage électrique comporte un collecteur tournant. Cette configuration avantageuse permet d'établir un couplage électromécanique optimal, comme évoqué précédemment. Dans le contexte de la présente invention, le collecteur tournant est un organe électrique qui permet de créer une connexion électrique entre une partie fixe et une partie tournante. Par suite, les premiers fils électriques sont, par exemple, reliés électriquement à la partie fixe du collecteur tournant tandis que les deuxièmes fils électriques sont reliés électriquement à la partie tournante du collecteur tournant, assurant ainsi une continuité électrique malgré la ou les rotations du collecteur tournant ;
- le collecteur tournant est monté entre l'embase et la structure porteuse. Plus particulièrement, le collecteur tournant est monté de manière coaxiale par rapport à l'axe de rotation du système photovoltaïque ;
- l'embase comporte un mât, par exemple cylindrique, qui s'étend depuis le dispositif d'assemblage, et la structure porteuse comporte une portée tubulaire concentrique au mât, le mât et la portée tubulaire définissant ensemble l'axe de rotation de la structure porteuse. La portée tubulaire s'étend depuis la platine de la structure porteuse. La portée tubulaire est solidaire de la platine. La portée tubulaire est située radialement à l'extérieur du mât. En d'autres termes, le mât s'étend à l'intérieur de la portée tubulaire.

Dans le contexte de la présente invention, le mât est de longueur prédéterminée. Selon un mode de réalisation simplifié, le mât est de longueur fixe, prenant par exemple la forme d'un cylindre de longueur déterminée. Selon un mode de réalisation amélioré, le mât est de longueur réglable, le mât comportant un moyen de réglage de la longueur dudit mât. Par exemple, le mât comporte un premier cylindre logeant un deuxième cylindre de sorte que le deuxième cylindre soit monté glissant dans le premier cylindre ; et le mât comporte des moyens de réglage, tels que par exemple un ergot escamotable s'étendant depuis le deuxième cylindre et en direction du premier cylindre, le premier cylindre comportant une pluralité de trous répartis suivant la hauteur du mât afin de pouvoir recevoir une extrémité libre de l'ergot escamotable. Il est ainsi possible de choisir une longueur précise pour la mât en engageant l'ergot escamotable dans l'un ou l'autre des trous ;
- afin de faciliter la mise en rotation de la portée tubulaire par rapport au mât, le système photovoltaïque comporte au mois un roulement à billes placé dans une position intermédiaire entre le mât et la portée tubulaire. En particulier, de manière avantageuse, le système photovoltaïque comporte un premier roulement à billes situé au niveau d'une première extrémité du mât proximale de l'élément de support du véhicule mobile, et un deuxième roulement à billes situé au niveau d'une deuxième extrémité du mât proximale du panneau photovoltaïque, à distance du premier roulement à billes ;
- le mât (avantageusement cylindrique) débouche dans la platine de la structure porteuse, ladite platine comportant une ouverture circulaire permettant de faire passer une extrémité libre du mât avec un jeu radial. Cette configuration avantageuse permet de faciliter l'interaction entre le moteur électrique, le mât et la structure porteuse. Complémentairement, le collecteur tournant est associé au mât creux, au niveau de l'extrémité libre du mât ;
- selon un premier mode de réalisation, le collecteur tournant est du type d'un collecteur axial, de sorte que les fils électriques s'étendent au travers d'une partie centrale du collecteur tournant, les deuxièmes fils électriques s'étendant depuis le collecteur tournant au travers du mât (par exemple cylindrique) jusqu'au dispositif d'assemblage. Dans ce premier mode de réalisation, les premiers fils électriques et les deuxièmes fils électriques débouchent de part et d'autre du collecteur tournant, dans une configuration axiale et à proximité de l'axe de rotation. Dans ce premier mode de réalisation, les deuxièmes fils électriques débouchent dans le mât ;
- dans ce premier mode de réalisation, le collecteur tournant est emmanché dans le mât au niveau de son extrémité libre. Plus généralement, le collecteur tournant est fixé de manière solidaire au mât, au niveau de son extrémité libre ;
- dans ce premier mode de réalisation, la structure porteuse peut être pivotée autour de son axe de rotation de manière manuelle ou de manière contrôlée par le moteur électrique. En particulier, lorsque le moteur électrique est du type réversible, alors une telle rotation manuelle est plus facile et permet par exemple d'orienter le panneau photovoltaïque en direction du soleil levant avant l'apparition de ce dernier dans le ciel et donc en l'absence d'énergie électrique pour le moteur électrique ;
- dans ce premier mode de réalisation, le mât (par exemple cylindrique) comporte, au niveau de son extrémité libre, une roue crantée solidaire dudit mât et coaxiale de l'axe de rotation, le moteur électrique étant solidaire de la platine selon un montage orbital par rapport à la roue crantée, ledit moteur électrique étant couplé en rotation avec la roue crantée par une courroie. Plus généralement, le premier mode de réalisation prévoit que le moteur électrique est configuré de manière orbitale par rapport à l'axe de rotation et par rapport à la roue crantée, le moteur électrique étant couplé en rotation à la rotation par n'importe quel dispositif de couplage, tel que par exemple un jeu d'engrenages, une chaîne, une courroie... Dans le contexte de la présente invention, la roue crantée est configurée pour permettre un tel couplage en rotation avec le moteur électrique et le dispositif de couplage évoqué précédemment. La roue crantée comporte ainsi une pluralité de dents circonférentielles permettant à la courroie de ne pas glisser sur la roue crantée, ou permettant de coupler en rotation au moins un engrenage reliant le moteur électrique à ladite roue crantée ;
- le moteur électrique est fixé solidairement à la platine par l'intermédiaire d'entretoises placées entre le moteur électrique et la platine. De manière avantageuse, les entretoises sont formées d'un matériau absorbant les vibrations mécaniques afin de réduire le bruit du système photovoltaïque durant son fonctionnement.
- les entretoises comportent des ouvertures oblongues afin d'autoriser un réglage de la tension de la courroie par rapport à la roue crantée. Les ouvertures oblongues sont orientées de manière sécante par rapport à l'axe de rotation afin de pouvoir ajuster une distance radiale entre le moteur électrique et l'axe de rotation ;
- selon un deuxième mode de réalisation, le collecteur tournant est du type d'un collecteur radial, de sorte que les fils électriques s'étendent au travers d'une partie périphérique du collecteur tournant, les deuxièmes fils électriques s'étendant, depuis le collecteur tournant, entre le mât et la portée tubulaire, jusqu'à une ouverture radiale aménagée dans le mât creux, lesdits deuxièmes fils électriques s'étendant, depuis l'ouverture radiale et jusqu'au dispositif d'assemblage, dans le mât. Dans ce deuxième mode de réalisation, les premiers fils électriques et/ou les deuxièmes fils électriques débouchent de part et d'autre du collecteur tournant, dans une configuration axiale et à distance de l'axe de rotation. Dans ce deuxième mode de réalisation, les deuxièmes fils électriques débouchent dans un espace intermédiaire radial situé entre le mât et la portée tubulaire ;
- dans ce deuxième mode de réalisation, le moteur électrique est fixé solidairement à la platine de la structure porteuse, un arbre tournant du moteur électrique étant couplé au mât. Dans ce mode de réalisation, l'arbre du moteur électrique est placé dans l'axe de l'axe de rotation ;
- dans ce deuxième mode de réalisation, la structure porteuse peut être pivotée autour de son axe de rotation de manière manuelle ou de manière contrôlée par le moteur électrique. En particulier, lorsque le moteur électrique est du type réversible, alors une telle rotation manuelle est plus facile et permet par exemple d'orienter le panneau photovoltaïque en direction du soleil levant avant l'apparition de ce dernier dans le ciel et donc en l'absence d'énergie électrique pour le moteur électrique ;
- avantageusement, dans le premier mode de réalisation et le deuxième mode de réalisation, le système photovoltaïque selon l'invention comporte un interrupteur permettant d'isoler le moteur électrique et/ou la carte électronique de contrôle du panneau photovoltaïque et/ou de la batterie embarquée dans ledit système photovoltaïque afin de faciliter la rotation manuelle. Éventuellement, dans l'un ou l'autre des modes de réalisation présentés ici, le système photovoltaïque comporte un dispositif de débrayage du moteur électrique par rapport à l'axe de rotation, le dispositif de débrayage étant configuré pour pouvoir prendre une première configuration dans laquelle le moteur électrique est couplé en rotation à l'axe de rotation afin de pouvoir entrainer la structure porteuse en rotation autour de l'axe de rotation, et une deuxième configuration dans laquelle le moteur électrique est découplé de l'axe de rotation, de sorte qu'il est alors possible de faire pivoter la structure porteuse manuellement autour de son axe de rotation.

Selon un deuxième aspect de l'invention, il est proposé un véhicule mobile comportant un système photovoltaïque conforme au premier aspect de l'invention ou selon l'un quelconque de ses perfectionnements, le véhicule mobile comportant un élément de support auquel le système photovoltaïque est fixé solidairement.

Le véhicule mobile est du type d'un navire de plaisance, ou d'un camping-car ou d'une caravane ou d'un véhicule automobile, plus généralement.

Selon un troisième aspect de l'invention, il est proposé un procédé de contrôle du système photovoltaïque du véhicule mobile conforme au deuxième aspect de l'invention, dans lequel le moteur électrique est piloté afin de faire tourner le panneau photovoltaïque autour de son axe de rotation sans limitation de course, en fonction de la position du soleil et de l'orientation du véhicule mobile.

En d'autres termes, le procédé de contrôle du système photovoltaïque n'est pas limité par une butée mécanique et/ou électronique de fin de course définissant une position angulaire maximale pour la rotation du panneau photovoltaïque autour de son axe de rotation.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue tridimensionnelle de l'avant d'un exemple de réalisation d'un système photovoltaïque conforme au premier aspect de l'invention ;
[Fig.2] illustre une vue de profil du système photovoltaïque illustré sur la FIGURE 1 ;
[Fig.3] illustre une vue tridimensionnelle et de dessous du système photovoltaïque illustré sur la FIGURE 1 ;
[Fig.4] illustre une vue en coupe d'un premier mode de réalisation du système photovoltaïque conforme au premier aspect de l'invention ;
[Fig.5] illustre une vue en coupe d'une première variante de réalisation du système photovoltaïque selon le premier mode de réalisation illustré sur la FIGURE 4 ;
[Fig.6] illustre une vue en coupe d'une deuxième variante de réalisation du système photovoltaïque selon le premier mode de réalisation illustré sur la FIGURE 4 ;
[Fig.7] illustre une vue tridimensionnelle d'un deuxième mode de réalisation du système photovoltaïque conforme au premier aspect de l'invention ;
[Fig.8] illustre une vue en coupe du système photovoltaïque illustré sur la FIGURE 4 ;
[Fig.9] illustre une vue en coupe d'une première variante de réalisation du système photovoltaïque selon le deuxième mode de réalisation illustré sur les FIGURES 7 et 8 ;
[Fig.10] illustre une vue en coupe d'une deuxième variante de réalisation du système photovoltaïque selon le deuxième mode de réalisation illustré sur les FIGURES 7 et 8 ;
[Fig.11] illustre un exemple de réalisation d'un véhicule mobile conforme au deuxième aspect de l'invention ;
[Fig.12] qui illustre une autre variante de réalisation du système photovoltaïque.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

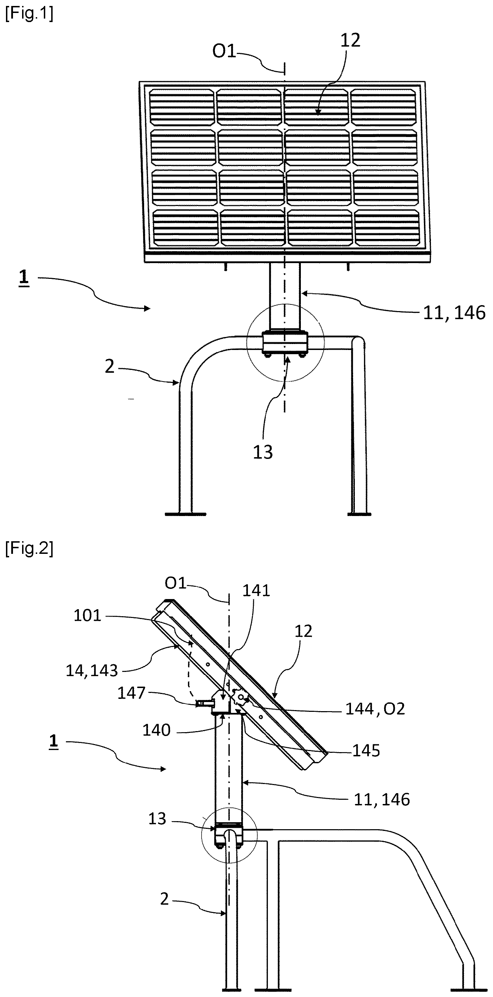

En référence aux FIGURES 1 à 10, l'invention adresse un système photovoltaïque 1 pour un véhicule mobile 3, le système photovoltaïque 1 comportant :
- une embase 11 formant un châssis fixe destiné à être fixé solidairement à un élément de support 2 du véhicule mobile 3 ;
- un panneau photovoltaïque 12 supporté par une structure porteuse 14 mobile 3 en rotation par rapport à l'embase 11 ;
- au moins un fil électrique 101, 102 s'étendant entre la structure porteuse 14 et l'embase 11 afin de relier électriquement le panneau photovoltaïque 12 à un réseau électrique et/ou à une batterie électrique ;
- un moteur électrique 17 d'entrainement configuré pour faire tourner la structure porteuse 14 autour d'au moins un axe de rotation principal O1 ;
- un organe de couplage 15 électrique formant une interface entre la structure porteuse 14 et l'embase 11 de sorte à autoriser une connexion électrique continue malgré plusieurs rotations de la structure porteuse 14 par rapport au châssis fixe, le système photovoltaïque 1 comportant des premiers fils électriques 101 reliant le panneau photovoltaïque 12 à l'organe de couplage 15 électrique et des deuxièmes fils électriques 102 reliant l'organe de couplage 15 au réseau électrique et/ou à la batterie électrique, les deuxièmes fils électriques 102 s'étendant au travers de l'embase 11.

Ainsi, selon l'invention, le couplage astucieux organisé entre l'embase 11 et la structure porteuse 14 permet, via l'organe de couplage 15 électrique, de maintenir une connexion électrique constante sans se soucier de la rotation du système photovoltaïque 1 autour de l'axe de rotation principal O1. Ainsi, même si le système photovoltaïque 1 réalise un grand nombre de rotations successives dans un même sens, la connexion électrique entre les deuxièmes fils électriques 102, reliant le système photovoltaïque 1 au reste du véhicule mobile 3, et les premiers fils électriques 101 reliant l'organe de couplage 15 électrique au panneau photovoltaïque 12 et aux composants électriques embarqués dans la structure porteuse 14.

Comme visible sur les FIGURES, l'embase 11 forme une structure tubulaire. En particulier, l'embase 11 comporte un mât 110, par exemple cylindrique, qui s'étend depuis un dispositif d'assemblage 13 utilisé, au niveau d'une partie inférieure du mât cylindrique 110, pour solidariser le système photovoltaïque 1 à un élément de structure du véhicule mobile 3 équipé du système photovoltaïque 1 selon l'invention. Le mât cylindrique 110 s'étend de manière rectiligne à partir du dispositif d'assemblage 13, de sorte à matérialiser un axe de rotation principal O1 pour le système photovoltaïque 1.

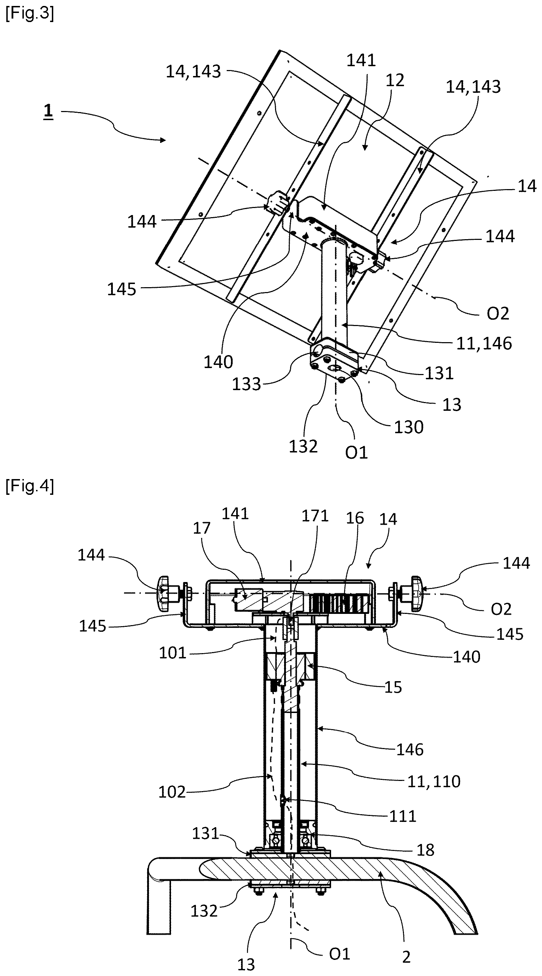

Le dispositif d'assemblage 13 est du type d'un dispositif de pressage de l'élément de support 2 entre une plaque de serrage 131 et une contre-plaque de serrage 132 131, la plaque de serrage 131 et la contre-plaque de serrage 132 131 étant reliées entre elles par des vis de serrage, comme visible notamment sur les FIGURES 3, 4, 7 et 8. Ainsi, l'élément de support 2 s'étend entre la plaque de serrage 131 et la contre-plaque de serrage 132 131, uns fois les vis de serrage serrées. Afin d'améliorer la prise de l'élément de support 2 entre la plaque de serrage 131 et la contre-plaque de serrage 132 131, le dispositif d'assemblage 13 comporte un patin de serrage situé entre la plaque de serrage 131 et la contre-plaque de serrage 132 131, le patin de serrage présentant une empreinte 133 complémentaire à une section transverse de l'élément de support 2 placé dans le dispositif d'assemblage 13.

Enfin, le dispositif d'assemblage 13 comporte un passage de câble 130 électrique au travers duquel passent les deuxièmes fils électriques 102 hors dudit dispositif d'assemblage 13. En particulier, le passage de câble 130 comporte un trou débouchant dans une face latérale du dispositif d'assemblage 13 et/ou dans la plaque de serrage 131.

La structure porteuse 14 permet de soutenir et d'orienter le panneau photovoltaïque 12 dans une pluralité d'orientations différentes en fonction de la course du soleil dans le ciel et malgré un éventuel mouvement du véhicule de loisir équipé dudit système photovoltaïque 1. En d'autres termes, la structure porteuse 14 permet de réaliser une telle orientation suivie tandis que le véhicule mobile 3 est en mouvement, s'affranchissant ainsi des butées mécaniques et/ou électroniques qui équipaient les systèmes photovoltaïques connus jusque là.

La structure porteuse 14 comporte une platine 140 surmontée d'un couvercle de fermeture 141 qui délimitent ensemble un boitier logeant des équipements électriques servant au pilotage du système photovoltaïque 1. Selon un aspect particulièrement astucieux de l'invention, tous les équipements électriques embarqués sur la structure porteuse 14 sont auto-alimentés par l'énergie électrique produite par le panneau photovoltaïque 12 lui-même. Ainsi, le système photovoltaïque 1 n'est pas consommateur d'électricité sur le réseau de bord du véhicule mobile 3 auquel il est associé.

Comme visible sur les FIGURES 4 à 10, la platine 140 supporte le moteur électrique 17 qui permet de générer la rotation autour de l'axe de rotation principal O1. Le moteur électrique 17 est fixé solidairement à la platine 140. Afin de limiter le bruit et les vibrations durant le fonctionnement du moteur électrique 17, le moteur électrique 17 est monté sur la platine 140 par des entretoises. De telles entretoises sont préférentiellement formées d'un matériau amortisseur, tel que par exemple des « silent block ».

La platine 140 support aussi des connecteurs électriques 147 qui permettent de relier électriquement le panneau photovoltaïque 12 à l'aide de premiers fils électriques 101. Les connecteurs électriques 147 sont par exemple du type de presse-étoupes afin de proposer un couplage étanche au travers de la platine 140. Les premiers fils électriques 101 reliant les connecteurs électriques 147 au panneau photovoltaïque 12 s'étendent à l'extérieur du boitier délimité par la platine 140 et le couvercle de fermeture 141.

Afin de permettre un asservissement du panneau photovoltaïque 12 sur la position du soleil dans le ciel, et malgré la disposition du véhicule mobile 3 équipé du système photovoltaïque 1, la platine 140 peut aussi supporter des capteurs, tels que par exemple des capteurs de température ou différentes sondes barométriques par exemple.

Pour permettre un asservissement du panneau photovoltaïque 12 sur la position du soleil dans le ciel, et malgré la disposition du véhicule mobile 3 équipé du système photovoltaïque 1, le système photovoltaïque 1 comporte aussi un dispositif photosensible configuré pour détecter un flux lumineux provenant du soleil. Un tel dispositif photosensible peut par exemple comporter deux capteurs photosensibles séparés par une cloison qui s'étend entre eux, de sorte à ce que, soumis à la lumière du soleil, la cloison forme une ombre sur l'un et/ou l'autre des capteurs photosensibles. Ainsi, en fonction de la position de l'ombre sur le l'un ou l'autre des capteurs photosensibles, il est possible de piloter le moteur électrique 17 dans un sens ou dans l'autre afin d'entrainer en rotation suivant le sens horaire ou anti-horaire, selon la position du soleil dans le ciel et la disposition du véhicule mobile 3 sur lequel le système photovoltaïque 1 est embarqué. Le dispositif photosensible est monté sur le panneau photovoltaïque 12, sur son cadre support, sur la platine 140 ou sur le couvercle de fermeture 141 par exemple.

La platine 140 comporte deux pattes de fixation 145 qui s'étendent au niveau d'extrémités latérales de la platine 140, de part et d'autre du couvercle de fermeture 141, comme visible sur les FIGURES 4, 7 et 8. Les pattes de fixation 145 forment des pattes pliées par rapport à la platine 140. Les pattes de fixation 145 sont situées en dehors du boitier délimité par la platine 140 et le couvercle de fermeture 141. Les pattes de fixation 145 permettent de matérialiser un axe de rotation secondaire O2 servant à incliner le panneau photovoltaïque 12 par rapport à la platine 140.

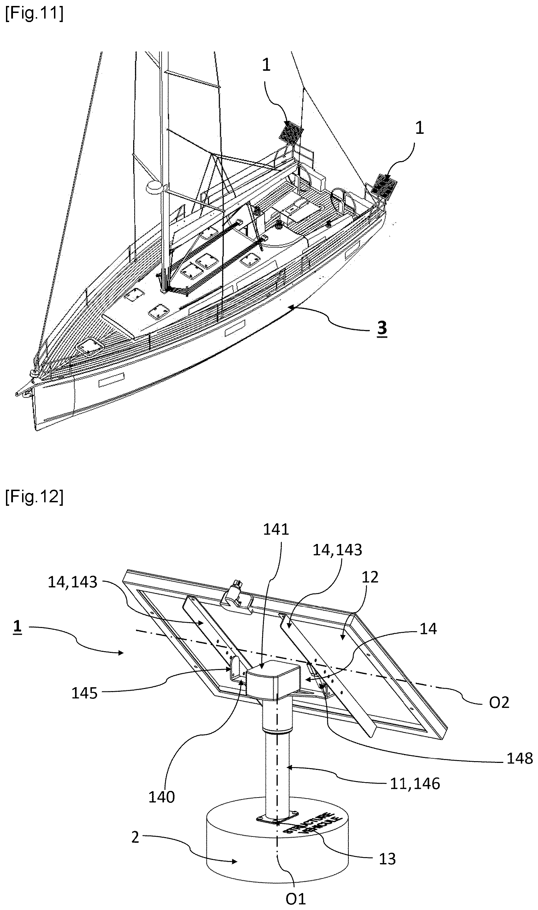

Dans les exemples de réalisation illustrés sur les FIGURES 1 à 10, l'axe de rotation secondaire O2 n'est pas motorisé, de sorte que le système photovoltaïque 1 n'ajuste pas l'inclinaison du panneau photovoltaïque 12 en fonction de la position du soleil dans le ciel. En revanche, dans le contexte de la présente invention, et comme visible sur la FIGURE 12, l'axe de rotation secondaire O2 peut être motorisé afin de pouvoir incliner le panneau photovoltaïque 12 suivant la position du soleil dans le ciel. En l'espèce, la FIGURE 12 illustre un mode de réalisation particulier dans lequel un vérin 148 motorisé est placé sur la platine 140, une extrémité libre du vérin 148 motorisé étant reliée au cadre porteur 143 du panneau photovoltaïque 12. L'embase du vérin 148 motorisé est solidaire de la platine 140, de sorte qu'un allongement dudit vérin 148 motorisé fait s'incliner le panneau photovoltaïque 12 autour de l'axe de rotation secondaire O2.

Dans les exemples de réalisation illustrés sur les FIGURES, un cadre support du panneau photovoltaïque 12, placé en arrière dudit panneau photovoltaïque 12, est fixé solidairement aux pattes de fixation 145 par l'intermédiaire de butées de serrage 144. Ces butées de serrage 144 sont du type à vis et à ressort. Ainsi, dans cet exemple de réalisation, le panneau photovoltaïque 12 est incliné suivant une valeur prédéterminée d'inclinaison autour de l'axe de rotation secondaire O2. Le panneau photovoltaïque 12 est ensuite maintenu incliné suivant cet angle d'inclinaison constant lors de la rotation autour de l'axe de rotation principal O1.

La platine 140 embarque aussi la carte électronique de contrôle 16 servant au pilotage du système photovoltaïque 1 suivant un axe de rotation ou suivant deux axes de rotation, comme évoqué précédemment. La carte électronique de contrôle 16 est embarquée dans le boitier et elle est alimentée électriquement par le panneau photovoltaïque 12, via une connexion filaire imposée par les premiers fils électriques 101 reliant les connecteurs électriques 147 à ladite carte électronique de contrôle 16.

Par suite, la carte électronique de contrôle 16 est aussi reliée électriquement au moteur électrique 17 afin d'en piloter son fonctionnement et la rotation du panneau photovoltaïque 12 autour de l'axe de rotation principal O1 et, éventuellement, autour de l'axe de rotation secondaire O2.

Comme évoqué précédemment, l'invention prévoit l'utilisation astucieuse d'un organe de couplage 15 électrique pour garantir une continuité électrique entre les premiers fils électriques 101 et les deuxièmes fils électriques 102, malgré la rotation ou les rotations successives de la structure porteuse 14 par rapport à l'embase 11. ainsi, même pour une rotation supérieure à 360°, la connexion électrique est maintenue entre les premiers fils électriques 101 et les deuxièmes fils électriques 102, assurant un fonctionnement optimal du système photovoltaïque 1.

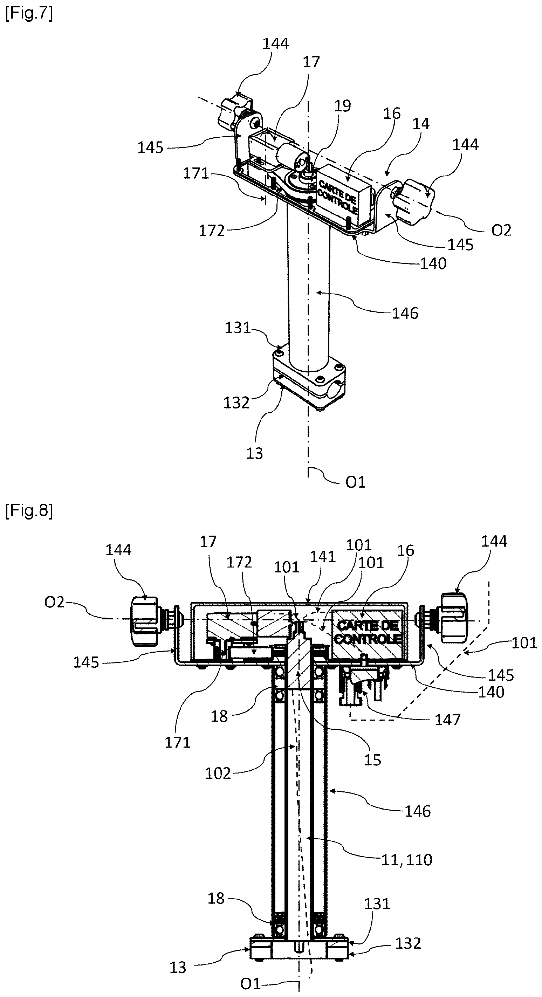

De manière astucieuse, l'organe de couplage 15 électrique est du type d'un collecteur tournant monté entre l'embase 11 et la structure porteuse 14. Plus particulièrement, le collecteur tournant est monté de manière coaxiale par rapport à l'axe de rotation du système photovoltaïque 1. Plus particulièrement encore, comme visible notamment sur les FIGURES 4 et 8, l'organe de couplage 15 électrique est associé au mât 110, avantageusement cylindrique, et même monté de manière coaxiale avec le mât cylindrique 110 et la portée tubulaire 146 de la structure porteuse 14. Cette configuration optimale permet de faire courir au moins une partie des fils électriques - et notamment au moins une partie des deuxièmes fils électriques 102 - à l'intérieur de l'embase 11, et même à l'intérieur de la portée tubulaire 146. Cette configuration astucieuse permet de protéger les fils électriques durant le fonctionnement du système photovoltaïque 1.

Enfin, le système photovoltaïque 1 comporte au moins un roulement à billes 18 permettant de matérialiser l'axe de rotation principal O1. Chaque roulement à billes 18 s'étend radialement entre le mât cylindrique 110 et la structure porteuse 14. De manière préférée, le système photovoltaïque 1 comporte :
- un premier roulement à billes 18 situé au niveau d'une extrémité inférieure du mât cylindrique 110, proximale du dispositif d'assemblage 13 et de l'élément de support 2 du véhicule mobile 3 ; et, éventuellement
- un deuxième roulement à billes 18 situé au niveau de l'extrémité libre du mât cylindrique 110, proximale du panneau photovoltaïque 12, à distance du premier roulement à billes 18.

Dans les paragraphes qui suivent, l'invention sera maintenant présentée au travers de deux modes de réalisations spécifiques qui vont maintenant être décrits. Chacun de ces modes de réalisation reprend tout ou partie des caractéristiques techniques décrites jusqu'ici comme étant communes à chacun d'entre eux. Par souci de clarté, les modes de réalisation illustrés sur les FIGURES 4 à 6 d'une part et ceux décrits sur les FIGURES 7 à 9 d'autre part seront décrits ci-après au travers de leurs singularités.

En référence aux FIGURES 7 à 10, un mode de réalisation spécifique de l'invention prévoit l'utilisation d'un organe de couplage 15 électrique du type d'un collecteur tournant axial, de sorte que les premiers fils électriques 101 s'étendent au travers d'une partie centrale du collecteur tournant, dans le boitier délimité par la platine 140 et le couvercle de fermeture 141, et que les deuxièmes fils électriques 102 s'étendent depuis le collecteur tournant au travers du mât cylindrique 110 jusqu'au dispositif d'assemblage 13.

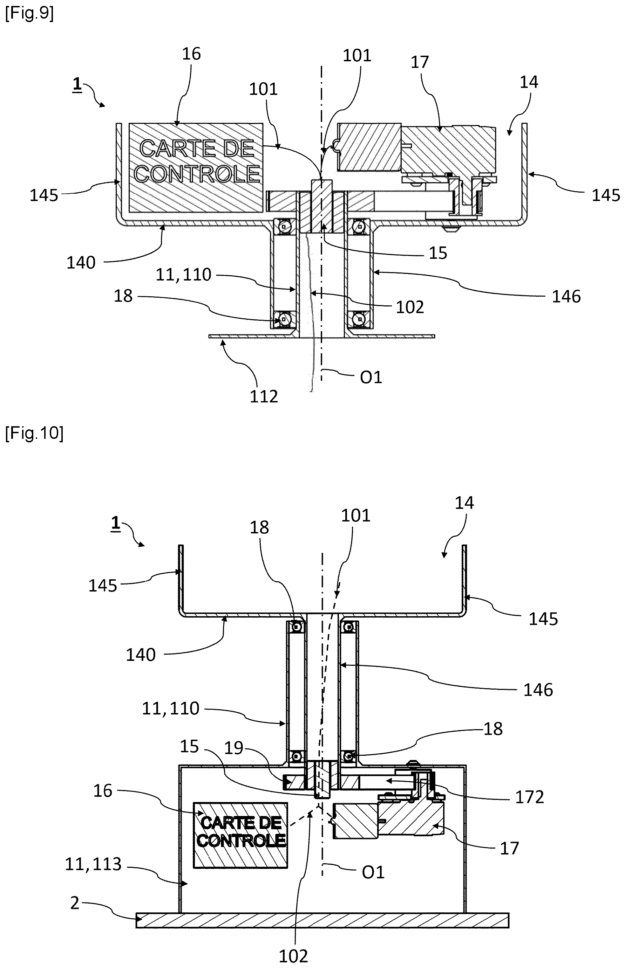

L'invention prévoit ensuite plusieurs déclinaisons de ce mode de réalisation décrites au travers des FIGURES 7 et 8 d'une part, de la FIGURE 9 et de la FIGURE 10 d'autre part.

Dans ces trois variantes de réalisation, les premiers fils électriques 101 et les deuxièmes fils électriques 102 débouchent de part et d'autre du collecteur tournant, dans une configuration axiale et à proximité de l'axe de rotation. Les deuxièmes fils électriques 102 débouchent dans le mât cylindrique 110.

Les FIGURES 7 et 8 illustrent une première variante de réalisation selon laquelle la structure porteuse 14 est portée en rotation en haut d'un mât cylindrique 110 long, c'est-à-dire de plusieurs dizaines de centimètres au moins afin de pouvoir s'élever au-dessus de certains obstacles présents sur le véhicule mobile 3 et de permettre au panneau photovoltaïque 12 de pouvoir tourner librement au-dessus dudit mât cylindrique 110.

La FIGURE 9 illustre une deuxième variante de réalisation selon laquelle la structure porteuse est portée en rotation en haut d'un mât cylindrique 110 court, c'est-à-dire d'une longueur comprise entre 1 cm et 15 cm. Cette deuxième variante est particulièrement adaptée à un système photovoltaïque 1 fixé directement sur un plancher, un ponton, un toit ou n'importe quelle structure plane du véhicule mobile 3. À cet effet, le système photovoltaïque 1 comporte avantageusement une semelle 112 de fixation sur une telle structure plane formant alors l'élément de support 2 au sens de l'invention. Cette deuxième variant de réalisation permet de réduire l'encombrement vertical du système photovoltaïque 1 et de réduire par exemple la prise au vent du panneau photovoltaïque 12.

Dans ces deux premières variantes de réalisation, une extrémité libre du mât cylindrique 110 débouche au travers d'une ouverture aménagée dans la platine 140, et le collecteur tournant est emmanché dans le mât cylindrique 110 au niveau de son extrémité libre, dans le boitier délimité par la platine 140 et le couvercle de fermeture 141. À cet effet, le mât cylindrique 110 comporte, au niveau de son extrémité libre, une roue crantée 19 solidaire dudit mât cylindrique 110 et coaxiale de l'axe de rotation principal O1. La roue crantée 19 est fixée solidairement au mât cylindrique 110 et s'étend dans le boitier. La roue crantée définit ainsi une surface cylindrique coaxiale avec l'axe de rotation principal O1 et permettant l'interaction avec une courroie 172 crantée.

En effet, dans ces deux premières variantes de réalisation, le moteur électrique 17 est solidaire de la platine 140 et/ou du couvercle de fermeture 141. Le moteur électrique 17, et plus particulièrement son arbre tournant, est excentré par rapport à l'axe de rotation principal O1, selon un montage orbital. L'arbre tournant du moteur électrique 17 est couplé en rotation avec la roue crantée 19 par l'intermédiaire de la courroie 172. Ainsi, lorsque le moteur électrique 17 est piloté, l'arbre tournant entraine une circulation de la courroie 172 et, de fait, une rotation de la structure porteuse 14 autour de l'axe de rotation.

L'utilisation de l'organe de couplage 15 électrique permet de manière astucieuse d'autoriser ces rotations infinies sans contraintes, les deuxièmes fils électriques 102 s'étendant alors dans le mât cylindrique 110. Les deuxièmes fils électriques 102 débouchent dans le dispositif d'assemblage 13 et sont connectées au réseau de bord du véhicule mobile 3 ou à une batterie de stockage électrique.

Dans ces deux premières variantes de réalisation, les entretoises supportant le moteur électrique 17 sur la platine 140 comportent des ouvertures oblongues afin d'autoriser un réglage de la tension de la courroie 172 par rapport à la roue crantée 19. Les ouvertures oblongues sont orientées en direction de l'axe de rotation principal O1 afin de pouvoir ajuster une distance radiale entre le moteur électrique 17 et l'axe de rotation.

Enfin, la FIGURE 10 illustre une troisième variante de réalisation proposant une structure inversée par rapport à la première variante de réalisation illustrée sur les FIGURES 7 et 8. Dans cette variante de réalisation, le mât cylindrique 110 loge la portée tubulaire 146. En d'autres termes, le mât cylindrique 110 et la portée tubulaire 146 sont montés de manière coaxiale l'un par rapport à l'autre, mais c'est le mât cylindrique 110 qui présente un diamètre plus grand de sorte à coiffer la structure tubulaire 146 en son centre. Ainsi, la structure tubulaire 146, solidaire de la platine 140, s'étend vers le bas en direction d'une boite 113 logeant désormais le moteur électrique 17 et la carte électronique de contrôle 16.

Dans cette troisième variante de réalisation, la structure tubulaire 146 s'étend depuis la platine 140 vers le bas et en direction de la boite 113 et débouche dans la boite 113. Le mat cylindrique 110 s'étend lui depuis la boite 113 en direction de la platine 140 mais tout en aménageant un jeu axial entre la platine 140 et une extrémité libre du mât cylindrique 110.

La boite 113 est fixée solidairement à l'élément de support 2 du véhicule mobile 3 par tout moyen de fixation.

Dans cette troisième variante de réalisation, le collecteur tournant est emmanché dans la portée tubulaire 146 au niveau de son extrémité libre, dans la boite 113. À cet effet, le système photovoltaïque 1 comporte, au niveau de l'extrémité libre de la portée tubulaire 146, une roue crantée 19 solidaire de la portée tubulaire 146 et coaxiale de l'axe de rotation principal O1. La roue crantée 19 est fixée solidairement à la portée tubulaire 146 et s'étend dans la boite 113. La roue crantée 19 définit ainsi une surface cylindrique coaxiale avec l'axe de rotation principal O1 et permettant l'interaction avec une courroie 172 crantée.

En effet, dans cette troisième variante de réalisation, le moteur électrique 17 est solidaire de la boite 113. Le moteur électrique 17, et plus particulièrement son arbre tournant, est excentré par rapport à l'axe de rotation principal O1, selon un montage orbital. L'arbre tournant du moteur électrique 17 est couplé en rotation avec la roue crantée 19 par l'intermédiaire de la courroie 172. Ainsi, lorsque le moteur électrique 17 est piloté, l'arbre tournant entraine une circulation de la courroie 172 et, de fait, une rotation de la structure porteuse 14 autour de l'axe de rotation O1 via la portée tubulaire 146 montée dans le mât cylindrique 110.

L'utilisation de l'organe de couplage 15 électrique permet de manière astucieuse d'autoriser ces rotations infinies sans contraintes, les deuxièmes fils électriques 102 s'étendant alors dans le mât cylindrique 110. Les deuxièmes fils électriques 102 débouchent dans le dispositif d'assemblage 13 et sont connectées au réseau de bord du véhicule mobile 3 ou à une batterie de stockage électrique.

Dans cette troisième variante de réalisation, les entretoises supportant le moteur électrique 17 dans la boite 113 comportent des ouvertures oblongues afin d'autoriser un réglage de la tension de la courroie 172 par rapport à la roue crantée 19. Les ouvertures oblongues sont orientées en direction de l'axe de rotation principal O1 afin de pouvoir ajuster une distance radiale entre le moteur électrique 17 et l'axe de rotation.

En référence aux FIGURES 4, 5 et 6, il est décrit un deuxième mode de réalisation spécifique dans lequel l'invention prévoit l'utilisation d'un organe de couplage 15 électrique du type d'un collecteur tournant radial, de sorte que les premiers fils électriques 101 et les deuxièmes fils électriques 102 s'étendent au travers d'une partie périphérique du collecteur tournant. Les premiers fils électriques s'étendent depuis la carte électronique de contrôle 16 et/ou les connecteurs électriques 147 vers l'organe de couplage 15 électrique, et les deuxièmes fils électriques 102 s'étendent depuis le collecteur tournant et vers I dispositif d'assemblage 13.

En particulier, dans ces deuxièmes modes de réalisation, les premiers fils électriques 101 et/ou les deuxièmes fils électriques 102 débouchent de part et d'autre du collecteur tournant, dans une configuration axiale et à distance de l'axe de rotation. En outre, les deuxièmes fils électriques 102 débouchent dans un espace intermédiaire radial situé entre le mât cylindrique 110 et la portée tubulaire 146. Ainsi, la configuration concentrique du mât cylindrique 110 et de la portée tubulaire 146 permet de protéger les fils électriques 101, 102.

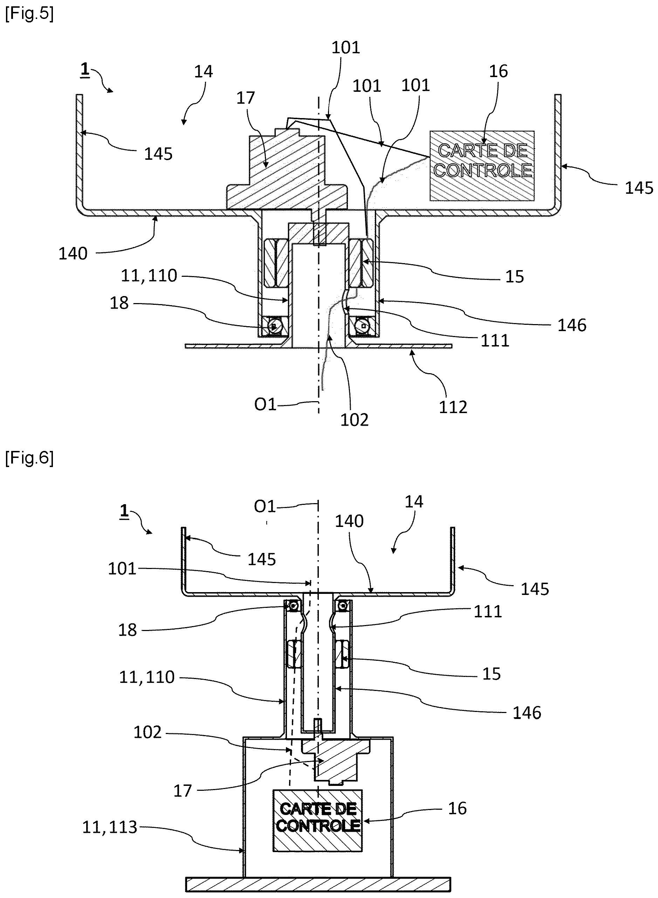

Comme visible sur les FIGURES 4 et 5, les deuxièmes fils électriques 102 s'étendent d'abord - depuis l'organe de couplage 15 électrique - dans un espace radial intercalaire entre le mât cylindrique 110 et la portée tubulaire 146, puis - au niveau d'une partie proximale du dispositif d'assemblage 13 - à l'intérieur du mât cylindrique 110. Ainsi, le mât cylindrique 110 comporte une ouverture radiale 111 pour permettre un tel passage des deuxièmes fils électriques 102.

Ce deuxième mode de réalisation est décliné dans trois variantes de réalisation :
La FIGURE 4 illustre une première variante de réalisation selon laquelle la structure porteuse 14 est portée en rotation en haut d'un mât cylindrique 110 long, c'est-à-dire de plusieurs dizaines de centimètres au moins afin de pouvoir s'élever au-dessus de certains obstacles présents sur le véhicule mobile 3 et de permettre au panneau photovoltaïque 12 de pouvoir tourner librement au-dessus dudit mât cylindrique 110.

La FIGURE 5 illustre une deuxième variante de réalisation selon laquelle la structure porteuse est portée en rotation en haut d'un mât cylindrique 110 court, c'est-à-dire d'une longueur comprise entre 1 cm et 15 cm. Cette deuxième variante est particulièrement adaptée à un système photovoltaïque 1 fixé directement sur un plancher, un ponton, un toit ou n'importe quelle structure plane du véhicule mobile 3. À cet effet, le système photovoltaïque 1 comporte avantageusement une semelle 112 de fixation sur une telle structure plane formant alors l'élément de support 2 au sens de l'invention. Cette deuxième variant de réalisation permet de réduire l'encombrement vertical du système photovoltaïque 1 et de réduire par exemple la prise au vent du panneau photovoltaïque 12.

Dans ces deux premières variantes de réalisation, le moteur électrique 17 est fixé solidairement à la platine 140 de la structure porteuse 14, de sorte que l'arbre tournant du moteur électrique 17 soit couplé au mât cylindrique 110 : l'arbre tournant du moteur électrique 17 est placé dans l'axe de l'axe de rotation.

Enfin, la FIGURE 6 illustre une troisième variante de réalisation proposant une structure inversée par rapport à la première variante de réalisation illustrée sur les FIGURES 4 et 5. Dans cette variante de réalisation, le mât cylindrique 110 loge la portée tubulaire 146. En d'autres termes, le mât cylindrique 110 et la portée tubulaire 146 sont montés de manière coaxiale l'un par rapport à l'autre, mais c'est le mât cylindrique 110 qui présente un diamètre plus grand de sorte à coiffer la structure tubulaire 146 en son centre. Ainsi, la structure tubulaire 146, solidaire de la platine 140, s'étend vers le bas en direction d'une boite 113 logeant désormais le moteur électrique 17 et la carte électronique de contrôle 16.

Dans cette troisième variante de réalisation, la structure tubulaire 146 s'étend depuis la platine 140 vers le bas et en direction de la boite 113 et débouche dans la boite 113. Le mat cylindrique 110 s'étend lui depuis la boite 113 en direction de la platine 140 mais tout en aménageant un jeu axial entre la platine 140 et une extrémité libre du mât cylindrique 110.

La boite 113 est fixée solidairement à l'élément de support 2 du véhicule mobile 3 par tout moyen de fixation.

Dans cette troisième variante de réalisation, le collecteur tournant est emmanché entre la portée tubulaire 146 et la mât cylindrique 110, entre la boite 113 et la platine 140. En effet, dans cette troisième variante de réalisation, le moteur électrique 17 est solidaire de la boite 113. Le moteur électrique 17, et plus particulièrement son arbre tournant, est monté coaxial avec l'axe de rotation principal O1, la portée tubulaire 146 et le mât cylindrique 110. L'arbre tournant du moteur électrique 17 est directement couplé en rotation avec la portée tubulaire 146. Ainsi, lorsque le moteur électrique 17 est piloté, l'arbre tournant entraine une circulation de la structure porteuse 14 autour de l'axe de rotation O1 via la portée tubulaire 146 montée dans le mât cylindrique 110.

Enfin, la FIGURE 11 illustre un exemple de réalisation d'un véhicule mobile 3 comportant au moins un - et ici deux - système photovoltaïque 1 tel que décrit précédemment. Dans cet exemple de réalisation, le véhicule mobile 3 est du type d'un navire, et notamment d'un voilier. Chaque système photovoltaïque 1 est placé en arrière du véhicule mobile 3, fixé au bastingage du voilier par l'intermédiaire du dispositif d'assemblage 13 tel que décrit précédemment.

En synthèse, l'invention un système photovoltaïque 1 pour un véhicule mobile 3 et comportant une embase 11 formant un châssis fixe destiné à être fixé solidairement à un élément de support 2 du véhicule mobile 3, un panneau photovoltaïque 12 supporté par une structure porteuse 14 mobile 3 en rotation par rapport à l'embase 11, un moteur électrique 17 d'entrainement configuré pour faire tourner la structure porteuse 14 autour d'un axe de rotation principal O1, et un organe de couplage 15 électrique placé entre la structure porteuse 14 et l'embase 11 afin d'autoriser une connexion électrique continue malgré plusieurs rotations de la structure porteuse 14 par rapport à l'embase 11. L'organe de couplage 15 électrique permet de garantir un couplage électrique entre deux premiers fils électriques 101 s'étendant entre le panneau photovoltaïque 12 et l'organe de couplage 15 électrique et des deuxièmes fils électriques 102 s'étendant entre l'organe de couplage 15 électrique et un réseau de bord du véhicule mobile 3.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier, toutes les variantes et modes de réalisation décrits précédemment sont combinables entre eux.

## Revendications

1. Système photovoltaïque (1) pour un véhicule mobile (3), notamment un véhicule automobile (3), un camping-car, une caravane ou un navire, le système photovoltaïque (1) comportant :
- une embase (11) formant un châssis fixe destiné à être fixé solidairement à un élément de support (2) du véhicule mobile (3) ;
- un panneau photovoltaïque (12) supporté par une structure porteuse (14) mobile (3) en rotation par rapport à l'embase (11) ;
- au moins un fil électrique (101, 102) s'étendant entre la structure porteuse (14) et l'embase (11) afin de relier électriquement le panneau photovoltaïque (12) à un réseau électrique et/ou à une batterie électrique ;
- un moteur électrique (17) d'entrainement configuré pour faire tourner la structure porteuse (14) autour d'au moins un axe de rotation ;
- un organe de couplage (15) électrique formant une interface entre la structure porteuse (14) et l'embase (11) de sorte à autoriser une connexion électrique continue malgré plusieurs rotations de la structure porteuse (14) par rapport au châssis fixe, le système photovoltaïque (1) comportant des premiers fils électriques (101) reliant le panneau photovoltaïque (12) à l'organe de couplage (15) électrique et des deuxièmes fils électriques (102) reliant l'organe de couplage (15) au réseau électrique et/ou à la batterie électrique, les deuxièmes fils électriques (102) s'étendant au travers de l'embase (11).

2. Système photovoltaïque (1) selon la revendication précédente, dans lequel le système photovoltaïque (1) comporte un dispositif photorésistif utilisé pour piloter la rotation du panneau photovoltaïque (12) autour de son axe de rotation.

3. Système photovoltaïque (1) selon l'une quelconque des revendications précédentes, dans lequel le système photovoltaïque (1) comporte un dispositif d'assemblage (13) sur l'élément de support (2) du véhicule mobile (3), le dispositif d'assemblage (13) étant associé à une partie de l'embase (11) située à distance de la structure porteuse (14).

4. Système photovoltaïque (1) selon la revendication précédente, dans lequel le dispositif d'assemblage (13) comporte un passage de câble (130) électrique au travers duquel passent les deuxièmes fils électriques (102) hors dudit dispositif d'assemblage (13).

5. Système photovoltaïque (1) selon l'une quelconque des revendications précédentes, dans lequel la structure porteuse (14) comporte une platine (140) supportant une carte électronique de contrôle (16) du système photovoltaïque (1) et un couvercle de fermeture (141) collaborant avec la platine (140).

6. Système photovoltaïque (1) selon la revendication précédente, dans lequel la structure porteuse (14) comporte aussi au moins un connecteur électrique (147) permettant de relier électriquement le panneau photovoltaïque (12) à la carte électronique de contrôle (16) par l'intermédiaire des premiers fils électriques (101), l'au moins un connecteur électrique (147) étant relié électriquement à un collecteur tournant par l'intermédiaire des premiers fils électriques (101).

7. Système photovoltaïque (1) selon la revendication précédente, dans lequel le moteur électrique (17) est relié électriquement à chaque au moins un connecteur électrique (147) et/ou à la carte électronique de contrôle (16), de sorte que le moteur électrique (17) est alimenté par l'énergie électrique produite par le panneau photovoltaïque (12).

8. Système photovoltaïque (1) selon l'une quelconque des revendications 3 à 7, dans lequel l'embase (11) comporte un mât (110) qui s'étend depuis le dispositif d'assemblage (13), et la structure porteuse (14) comporte une portée tubulaire (146) concentrique au mât (110), le mât (110) et la portée tubulaire (146) définissant ensemble l'axe de rotation de la structure porteuse (14).

9. Système photovoltaïque (1) selon l'une quelconque des revendications précédentes, dans lequel l'organe de couplage (15) électrique comporte un collecteur tournant monté entre l'embase (11) et la structure porteuse (14).

10. Système photovoltaïque (1) selon la revendication 9 pris en combinaison avec la revendication 3, dans lequel le collecteur tournant est du type d'un collecteur axial, de sorte que les fils électriques s'étendent au travers d'une partie centrale du collecteur tournant, les deuxièmes fils électriques (102) s'étendant depuis le collecteur tournant au travers du mât (110) jusqu'au dispositif d'assemblage (13).

11. Système photovoltaïque (1) selon la revendication précédente, dans lequel le mât (110) comporte, au niveau de son extrémité libre, une roue crantée (19) solidaire dudit mât (110) et coaxiale de l'axe de rotation, le moteur électrique (17) étant solidaire de la platine (140) selon un montage orbital par rapport à la roue crantée, ledit moteur électrique (17) étant couplé en rotation avec la roue crantée (19) par une courroie (172).

12. Système photovoltaïque (1) selon la revendication 9 pris en combinaison avec les revendications 3, 5 et 8, dans lequel le collecteur tournant est du type d'un collecteur radial, de sorte que les fils électriques s'étendent au travers d'une partie périphérique du collecteur tournant, les deuxièmes fils électriques (102) s'étendant, depuis le collecteur tournant, entre le mât (110) et la portée tubulaire (146), jusqu'à une ouverture radiale (111) aménagée dans le mât (110) creux, lesdits deuxièmes fils électriques (102) s'étendant, depuis l'ouverture radiale (111) et jusqu'au dispositif d'assemblage (13), dans le mât (110), le moteur électrique (17) étant fixé solidairement à la platine (140) de la structure porteuse (14), un arbre tournant du moteur électrique (17) étant couplé au mât (110).

13. Véhicule mobile (3) comportant un système photovoltaïque (1) selon l'une quelconque des revendications précédentes, le véhicule mobile (3) comportant un élément de support (2) auquel le système photovoltaïque (1) est fixé solidairement.

14. Procédé de contrôle du système photovoltaïque (1) du véhicule mobile (3) selon la revendication précédente, dans lequel le moteur électrique (17) est piloté afin de faire tourner le panneau photovoltaïque (12) autour de son axe de rotation sans limitation de course, en fonction de la position du soleil et de l'orientation du véhicule mobile (3).
